# EUROPEAN PATENT SPECIFICATION

(11) **EP 4 188 842 B1**
(45) Date of publication and mention of the grant of the patent: **24.07.2024**
(21) Application number: 21756076.2
(22) Date of filing: 22.07.2021
(51) Int. Cl.: B65G 1/04, B65D 88/12, B66F 9/07

(54) **METHOD AND AUTOMATED PLANT FOR STORING AND FEEDING ELONGATE-SHAPED SEMI-FINISHED PRODUCTS FOR A USER DEVICE.**
VERFAHREN UND AUTOMATISIERTE ANLAGE ZUM SPEICHERN UND ZUFÜHREN VON LÄNGLICHEN HALBFERTIGEN PRODUKTEN FÜR EINE BENUTZERVORRICHTUNG
PROCÉDÉ ET INSTALLATION AUTOMATISÉE DE STOCKAGE ET D'ACHEMINEMENT DE PRODUITS SEMI-FINIS DE FORME ALLONGÉE POUR UN DISPOSITIF UTILISATEUR

(30) Priority: 27.07.2020 IT 202000018145
(43) Date of publication of application: 07.06.2023
(73) Proprietor: METAL ART DI FRANCO E MAURO TRANQUILLI S.R.L., 60019 Senigallia (IT)
(72) Inventor: TRANQUILLI, Franco, 60019 Senigallia (AN) (IT)
(74) Representative: Palestrini, Mauro
(86) International application number: PCT/IT2021/050223
(87) International publication number: WO 2022/024154

(56) References cited:
- EP-A1- 3 527 506
- WO-A1-85/01493
- DE-A1- 3 403 029
- JP-U- S5 696 027
- US-A- 3 417 857
- US-A- 3 960 280

## Description

### Technical Field

This invention relates to a method and an automated plant for storing and feeding elongate-shaped semi-finished products, in particular bars or tubes, to a user device, such as, for example, a machine tool.

### Background art

In the field of mechanical processing operations involving the shaping of objects by removal of material performed with machine tools, starting from elongate-shaped semi-finished products such as bars or tubes, use is known of storage units for the semi-finished products which are structured in such a way as to house the elongate semi-finished products lying with their longitudinal dimension horizontal.

The semi-finished products normally then arrive at the user device contained in cases or grouped in bundles which, on their own or placed inside suitable cases, are stored near the user device so that they can then be picked up from this location, and transferred by feeding to the user device, with the aid of lifting equipment, such as cranes, of the static gantry type, or travelling on wheels, and or even by other types of lifting and conveying means, such as for example fork-lift trucks.

However, this way of proceeding involves several major disadvantages.

Indeed, the movements of the semi-finished products, towards and from the storage units, as well as from the temporary location near the user device and towards the user device itself, which are carried out by means of handling means of the general, multi-purpose, non-specialised type, involves management of the materials which is not very efficient in terms of speed and appropriateness of the operating response, as well as low management costs which conflict with the need to rapidly supply the user devices in the form of, as indicated, machine tools used in modern production plants.

On the other hand, it should also be noticed that very often the user devices are provided with specific feeders for semi-finished product material which although dedicated and designed for that purpose in turn remain dependent on loading by external means operatively interposed between the temporary material store and the loader of the machine tool for which that material is intended. Indeed, to feed said feeders it is necessary to use a gantry crane, fork-lift trucks, etc. to pick up one semi-finished product at a time from the bundle or from the case temporarily placed near the user device and to physically deposit them on the feeder which will then send them to the user device in known ways and in the times required by the time rates of the various processing operations which come one after another in the user device.

Another known solution, described in document US Pat. No. 3 960 280 A discloses the features of the preamble of claims 1 and 2.

Document JP S5696027 describes a system using a carriage as a storage unit for an elongated-shaped article. Two pairs of oblique plates, slidable, one with respect to the other and located on both sides of the carriage are operated by a mechanism capable of lifting or lowering the semi-finished item supported by the carriage.

### Disclosure of the invention

The aim of this invention is, therefore, to eliminate the above-mentioned disadvantages,by solving the problem of supplying a method for storing, handling and delivering elongate semi-finished products to machine tools, and a related plant for implementing that method, which are qualified for the fact they allow a more rapid and more economical response to the needs of the user devices, that is to say, the machine tools served; and a high operating flexibility with regard to the type of the above-mentioned machines and/or also with regard to the type of arrangement and orientation of the machines in the plan of a generic production department in which they are placed.

In accordance with the invention, these objects and results are achieved by a plant and a method as defined in the appended claims.

### Brief description of drawings

Further features and advantages of the invention will be made more evident with the aid of the detailed description of an example, non-limiting embodiment of the solution, made with reference to the accompanying drawings in which:
- Figure 1 is a perspective, three-dimensional, assembly view, of a plant according to the invention;
- Figure 2 is a perspective, three-dimensional view of a component of the invention shown with some parts cut away to better illustrate others;
- Figure 3 is a perspective, three-dimensional view of the component of Figure 2 operatively interconnected with other component parts of the plant;
- Figure 4 is a perspective, three-dimensional representation of a handling device specifically devised and equipped for operating inside the plant according to the invention;

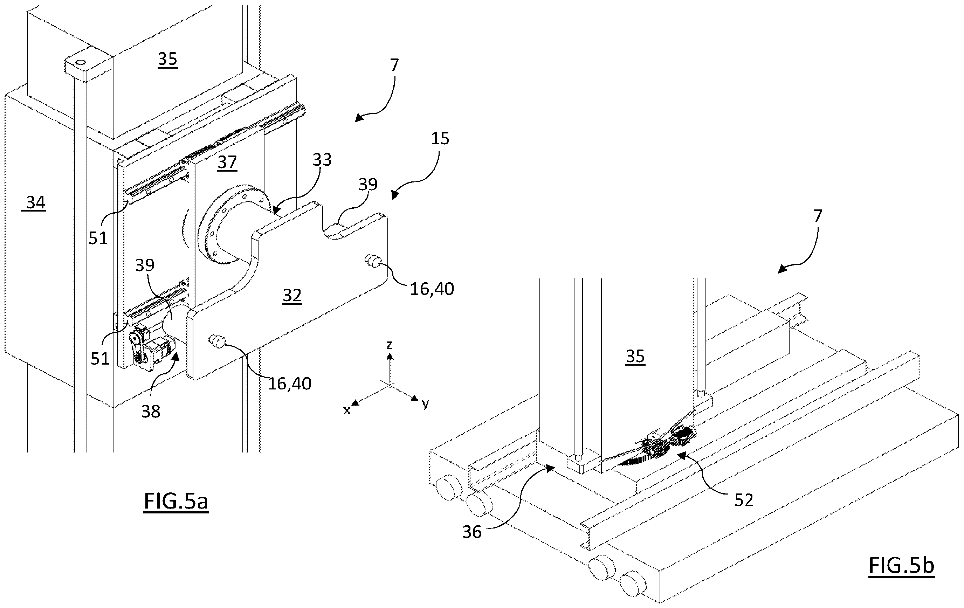

- Figures 5a and 5b are detail views of the handling device of Figure 4;

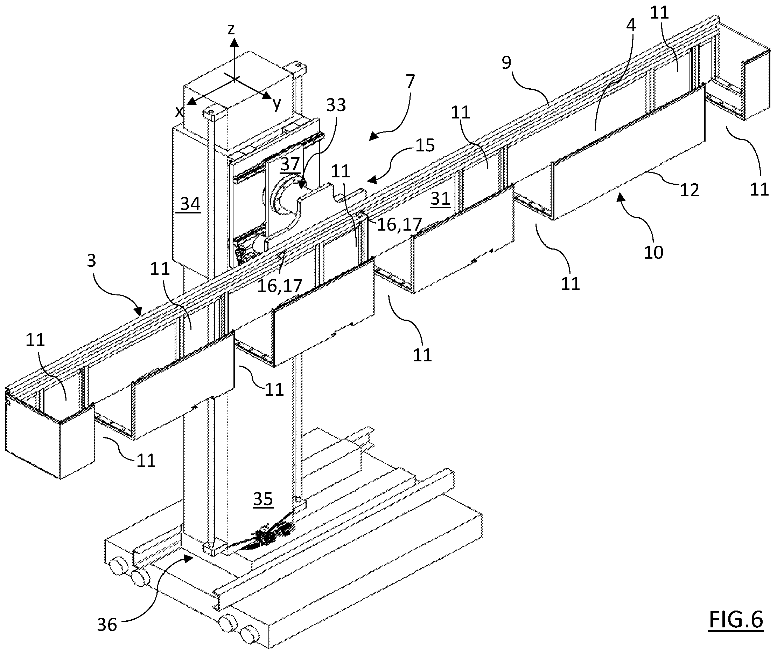

- Figure 6 is a perspective, three-dimensional assembly view of the components of Figures 2 and 4, shown in one of their characteristic operating states;
- Figure 7 is an enlarged view of several details of Figure 6;
- Figures 8 and 9 are perspective, three-dimensional views illustrating several operating steps of the plant;
- Figures 10 and 11 are side views of the plant, illustrating a further component of the plant shown in two of its consecutive operating states;
- Figure 12 is a perspective, axonometric, three-dimensional view of the component of Figures 10 and 11, shown with some parts cut away to better illustrate some of its own particular features;

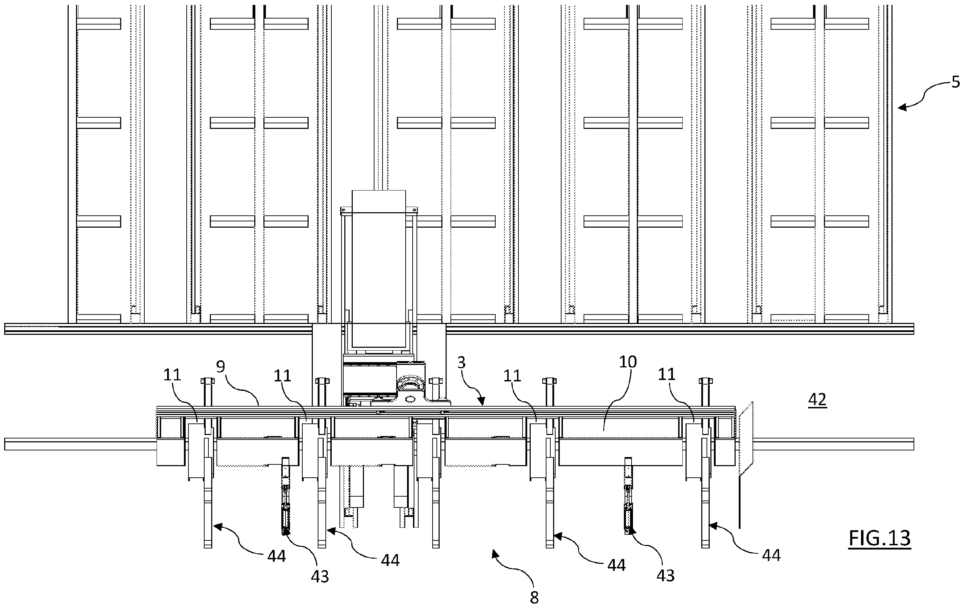

- Figure 13 is a top plan view of the plant according to the invention, showing an operating state of the component of Figure 12.

### Detailed description of preferred embodiment of the invention

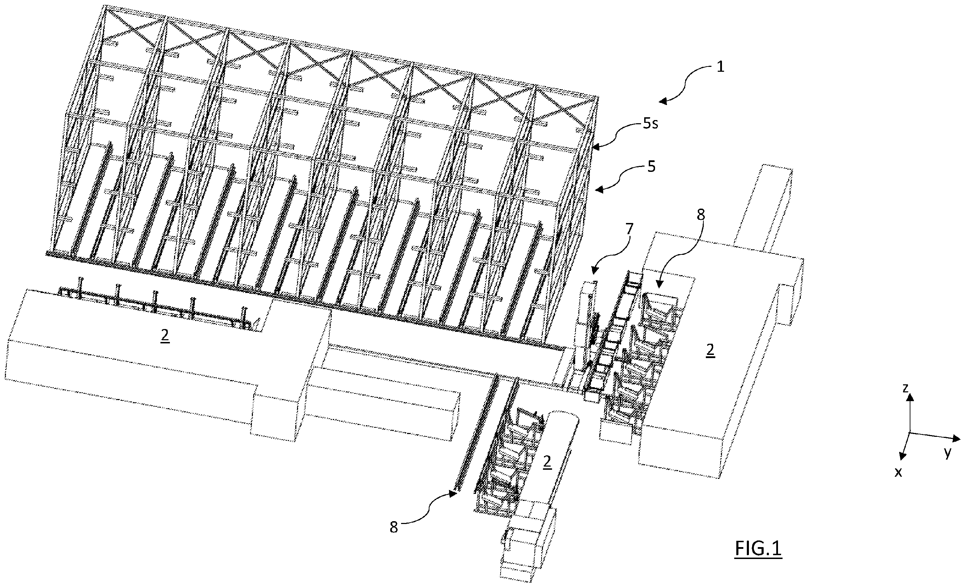

With reference to the figures of the accompanying drawings, in Figure 1 the numeral 1 denotes in its entirety an automated plant for storing and feeding elongate-shaped objects, such as semi-finished products in the form of bars or tubes, which are intended, in particular, to be fed to a user device 2 which is, for example, a machine tool, such as a lathe.

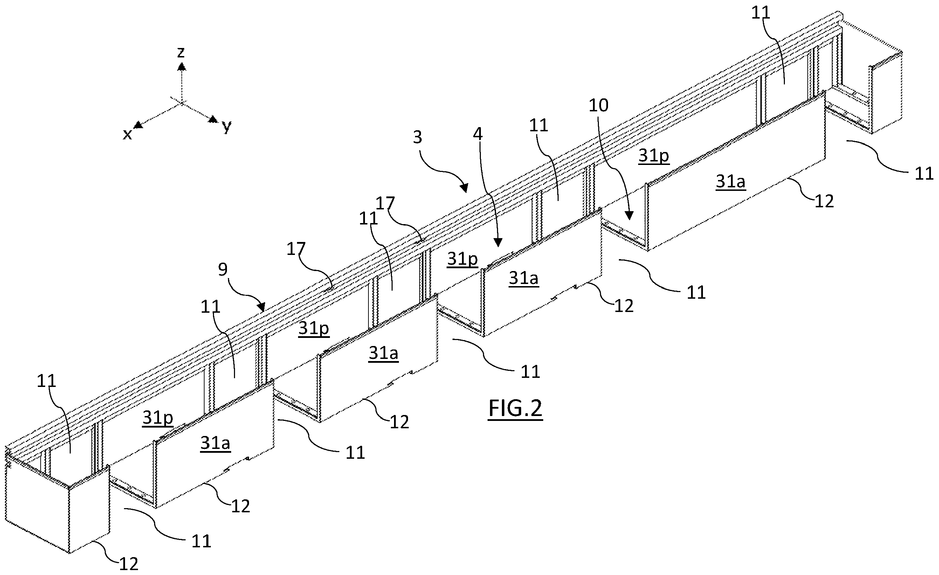

The plant 1 essentially comprises a storage unit 5 in which a plurality of cases 3 (visible in Figure 2) are placed in an orderly way, which are equipped with containment cavities 4 essentially having a parallelepiped, longitudinally elongate shape and shaped to match the length and the dimensions of the semi-finished products to be contained in them.

The storage unit 5 comprises a modular framework 5s, in the shape of a parallelepiped, for receiving the cases 3.

The plant 1 also comprises special handling means 7 designed to operate with the cases 3 and, which, more specifically, are devised to transfer the cases 3 from the framework 5s to the user device (2); and also comprises transfer means 8, devised for: picking up the semi-finished products contained inside the cases 3; accepting on themselves the load of the semi-finished products; and, finally, making them directly available for feeding to a said machine tool 2 for which said semi-finished products are intended.

More specifically, Figure 2 shows how the cases 3 essentially comprise a container body 9, provided with at least a flat, narrow and long base, labelled 10 as a whole, which is interrupted at various zones of its length, where several open, rectangular sections 11 pass through it, spaced apart along the longitudinal line of the case 3, a line, which according to the orientation of the figure is substantially parallel to one of the horizontal lines, labelled x therein.

The open sections 11 preferably extend to also affect a large part of a pair of opposite lateral walls 31p,31a of the case 3, which together with the base 10 help to delimit a pair of spatial angles, whose vertices are labelled 12.

In other words, the containment cavity 4 of the case 3 has a shape delimited by a "U"-shaped three-sided contour, equipped with two vertices 12 defining right-angles, which are adjacent to and on either side of the base 10 of the body 9 of the case 3.

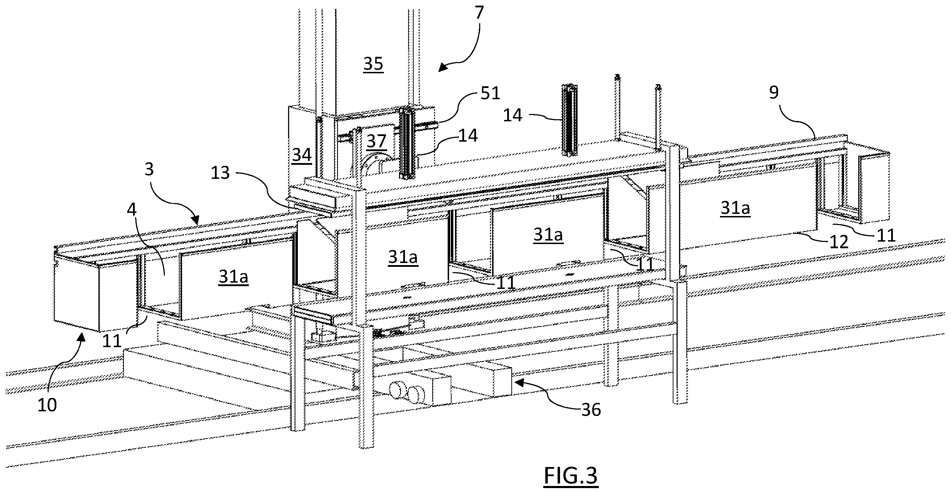

Figure 3 shows how the case 3 may also be provided with a lid 13; as well as means 14 for quick coupling - release of the lid 13 to/from the container body 9 of the case 3, preferably in the form of two linear actuators 14.

The lid 13 - whose length is preferably such that it only partly covers the containment cavity 4 - performs the function of preventing the elongate-shaped semi-finished products contained inside the case 3 from coming out of the case 3 during its movements.

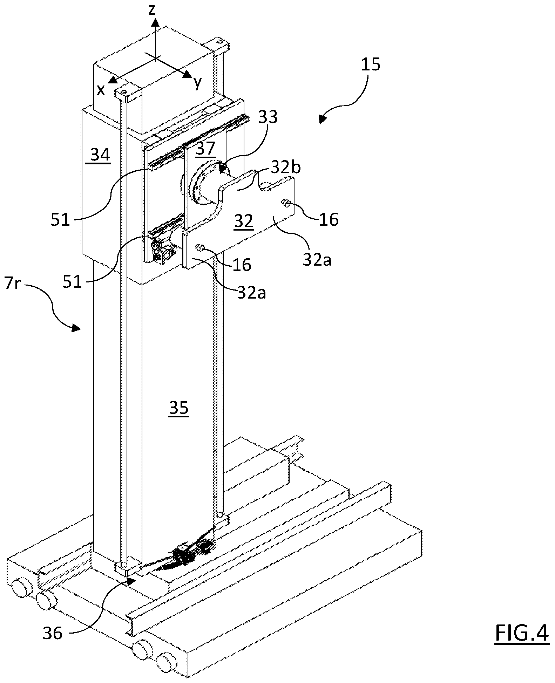

Figure 4 shows how the handling means 7 comprise a robot 7r, preferably of the Cartesian type, equipped with an end effector 15 provided with a pair of pins 16 for hooking and gripping the cases 3, which are rapidly engageable in matching through slots 17 in one of the lateral walls 31p of the case 3.

The handling means 7 also comprise a flat plate 32, preferably having a three-lobed shape, which, at a pair of lobes 32a, supports said pair of pins 16, cantilevered each one along a substantially horizontal line y; and which at a third lobe 32b is in contrast supported by a carriage 37 equipped with a supporting unit 33 for the plate 32.

The handling means 7 also comprise a first supporting carriage 34 for the effector 15, and a vertical parallelepiped upright 35, which supports said first carriage 34 guided along a line of translation parallel to the vertical line z.

A second carriage 36, movable relative to the ground and along at least one line of translation, parallel to the horizontal line x, supports the upright 35 at its base giving it the further degree of freedom to rotate, by means of a suitable flat thrust bearing 52, motor-driven and interposed between said upright 35 and the second carriage 36 below, rotatably about a vertical line z.

The carriage 37, hereinafter also referred to as the third carriage, carries the supporting unit 33 of the plate 32. The carriage 37 in turn is supported by the first carriage 34 with freedom to translate along translation guides 51, which are horizontal and parallel to the line x.

The effector 15 also includes clamping means generally labelled 38, which are provided for clamping the case 3 and the plate 32 of the effector 15 in a condition of mutual planar, forced contact.

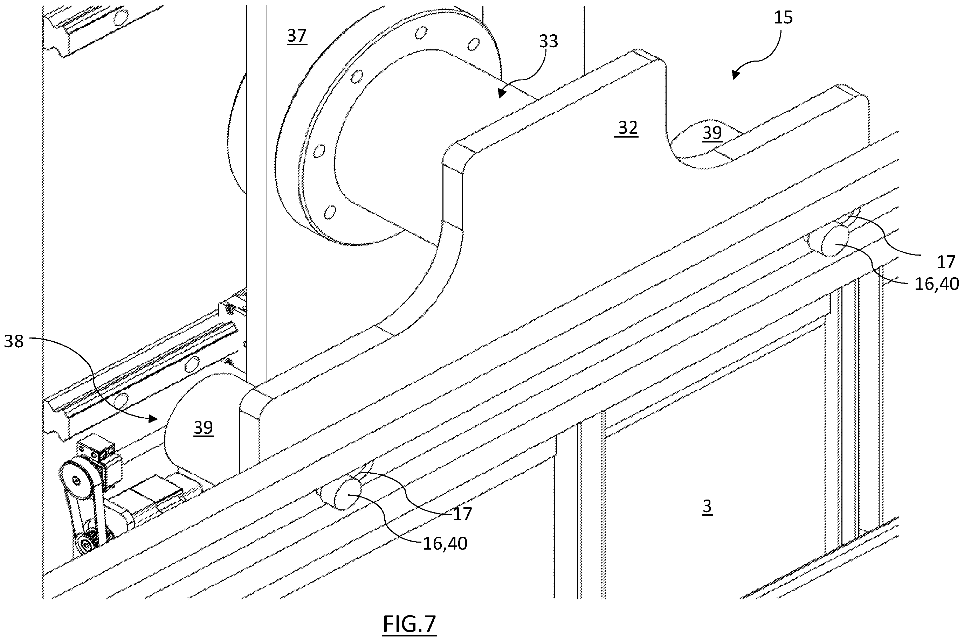

Said clamping means 38, better illustrated in Figure 7 in particular comprise linear actuators 39, devised to operate the pins 16 with axial traction or thrust, along the line y.

Since the latter are provided with heads 40 which jut out cantilevered along a line transversal to the axis of the pins 16, that is to say to the linear actuators 39, the actuators 39 themselves are capable of moving the case 3 so that its wall 31p is in direct contact with the three-lobed plate 32, in addition to mutual forced contact between them.

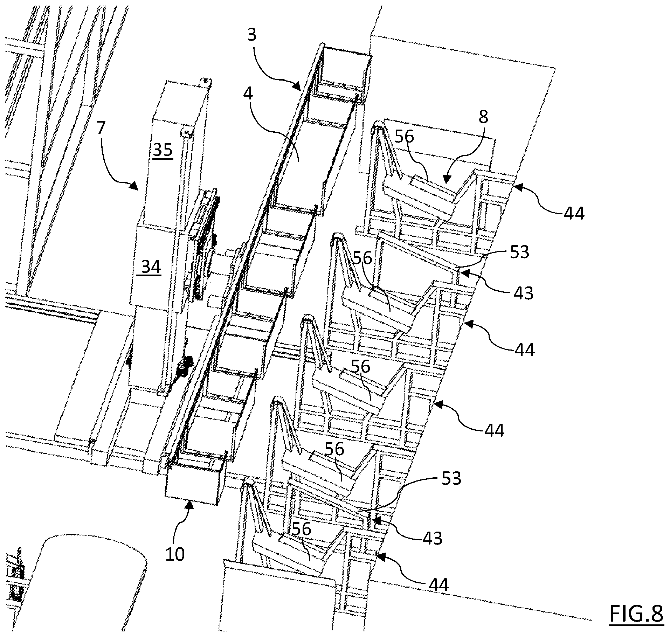

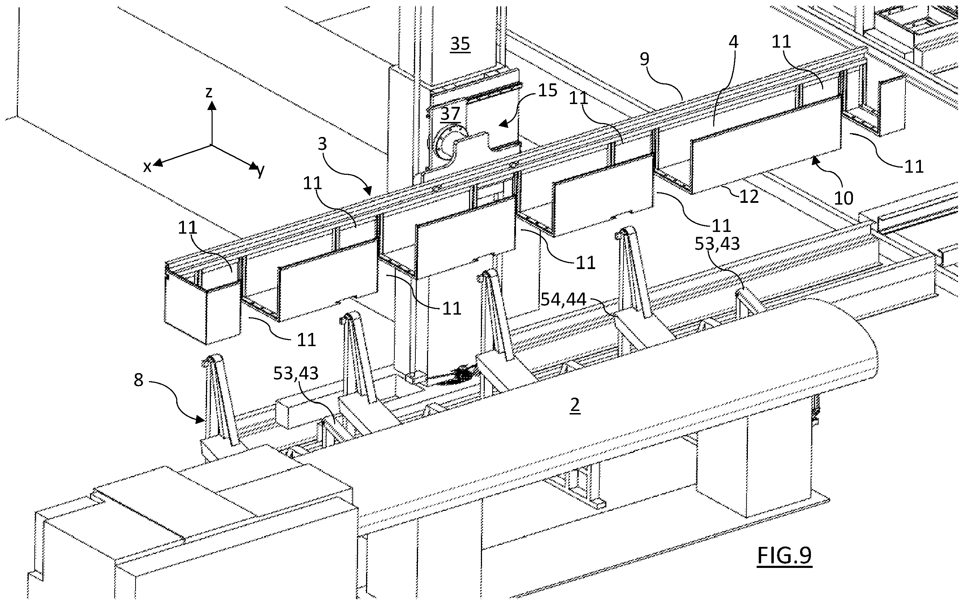

Because of the degrees of freedom possessed, the handling means 7 are capable of moving the case 3 in the horizontal state towards the user device 2 as shown in Figures 8 and 9.

At this point, the case 3, previously freed of the lid 13, through an intermediate step corresponding to the condition of Figure 4, is ready to be transferred to the user device 2, that is to say, to the machine tool for which it is intended, which is the above-mentioned user device 2.

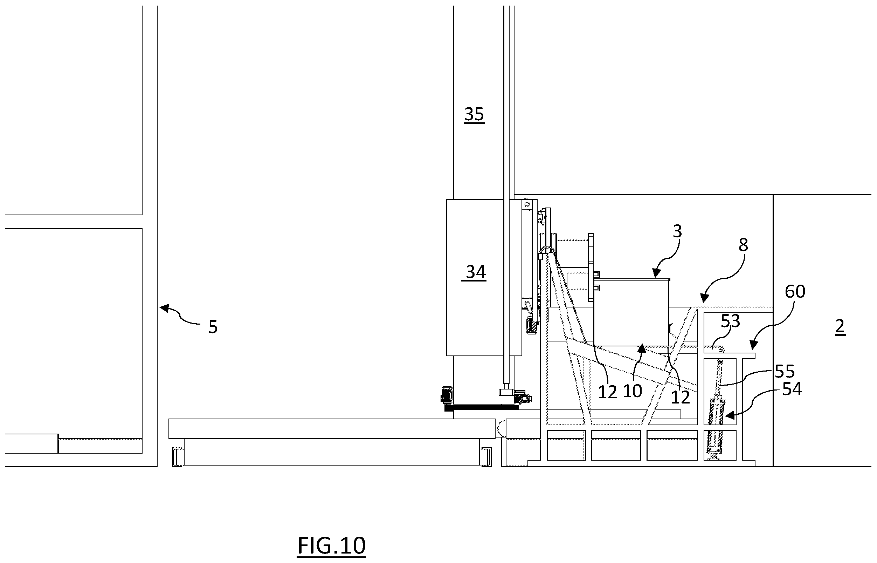

For that purpose the plant 1 comprises, alongside each machine tool 2 for which the products contained in the cases 3 are intended, the presence of said transfer means 8 which, in particular, comprise (Figures 10, 11 and 12) an automatic loading device 60 suitable for picking up the semi-finished products directly from the cases 3.

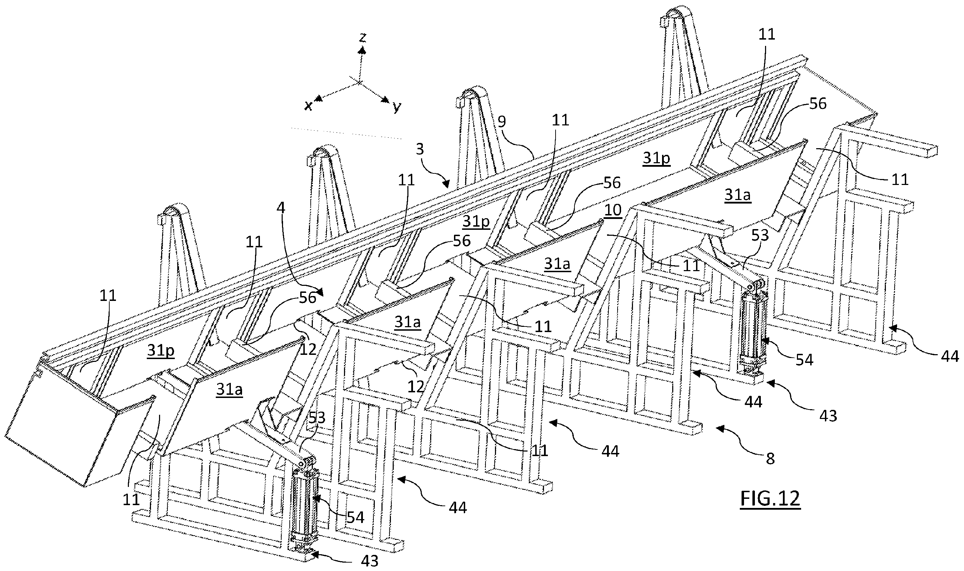

More specifically, the automatic loading device 60 comprises two separate rows of supports 43 and 44 which are parallel to the line x and clearly visible in Figure 12.

The supports 43 and 44 have an elongate shape, are interposed between each other in an orderly way and have substantially planar structures lying in vertical planes essential orthogonal to the line x.

Figure 12 shows in particular that a first row comprises two supports 43 with variable configuration, whilst the other row in contrast comprises four supports 44 with fixed, invariable configuration.

Because of those structural configurations, as will be more evident below, the supports 43 and 44 are movable with motion relative to each other in the vertical planes, parallel to the reference plane yz.

Figure 12 also shows that the supports 44 having the fixed and geometrically invariable configuration are spaced apart along the longitudinal line of the case 3 parallel to the horizontal line x and are located at positions such that they can be placed at the open sections 11 of the base 10 and of the walls 31p,31a of the case 3.

In contrast, the supports 43 with variable geometric configuration are placed at closed sections of the base 10 of the case 3 and of the related walls 31p and 31a, on either side of the base 10.

Said supports 43 comprise in particular arms 53 having the shape of a parallelepiped, elongate and connected by a joint to a fixed part of the structure.

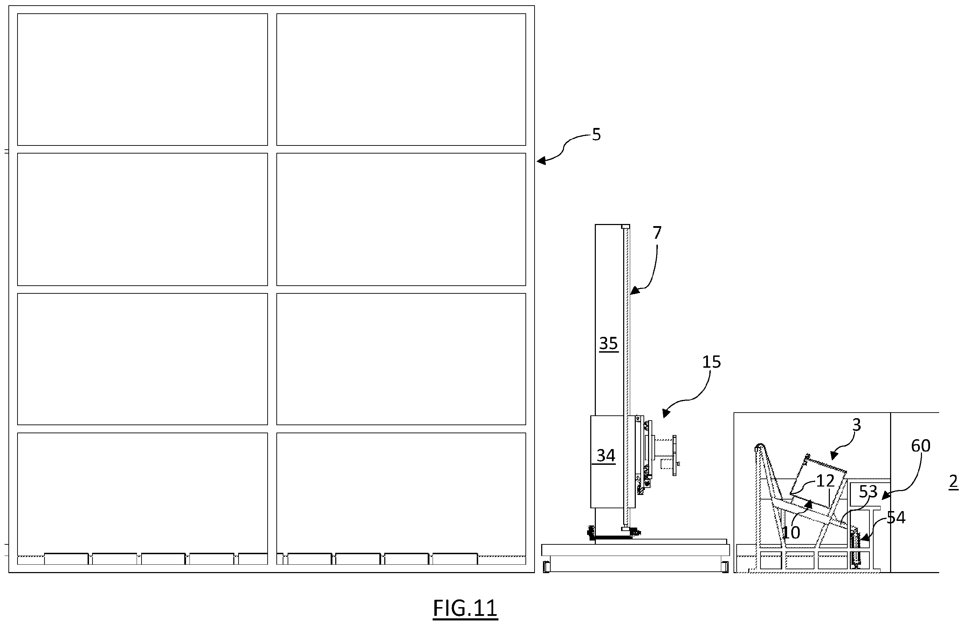

One end of the arms 53 is constrained to a linear actuator 54, so that as a result of the operating states of the latter, that is to say, the extended or retracted state of a rod 55 of the actuator, the respective arm 53 which at the opposite end is hinged to the fixed part of the structure can adopt a horizontal orientation as shown in Figure 10, or an oblique orientation , as shown in Figure 11.

Because of the function performed by those particular supports 43 and 44, when the robot 7r arrives with the horizontal case 3 near the machine tool 2 - as shown in Figures 8 and 9 - the robot 7r is able to release the case 3 in a horizontal configuration over the arms 53 of the variable configuration supports 43 of the first row, supports 43 which correspondingly are oriented to receive it in an appropriate way, as shown in Figure 10. At this point, if a return command is issued to the rods 55 of the actuators 54, the case 3 is gradually made to rotate angularly about its own longitudinal line as shown in Figure 11 and as can be seen by comparing the latter with Figure 10.

During this transition the load of the elongate semi-finished products contained in the case 3 is accepted by the fixed arms 56 of the supports 44 with geometrically invariable configuration, which thanks to the fact that they are positioned at the open sections 11, and as a result of the relative motion of the case not only accept on themselves the load of the semi-finished product, but also gradually extract it from the case 3 while the case remains held resting on the supports 43 of the first row which gradually pass from the horizontal orientation of Figure 10 to the oblique orientation of Figure 11.

Therefore, the case 3 is available to the user device 2 which can use the related contents as necessary, without the need for a preliminary extraction of those contents from the case 3 and without the need for individual loading by external means of the individual components of those contents.

The elongate semi-finished products, in the meantime supported by the fixed supports 44, in positions strictly determined first by the vertices 12 of the case 3 and then by the shape of the fixed supports 44, are then taken from their specific positions and fed towards the user device or machine tool 2 in the conventional way by known feed means with which the transfer means 8 are normally equipped.

Ultimately, the automatic loading device 60 with which the transfer means 8 are equipped performs its function by operating between two limit conditions. In a first of those conditions the case 3 arriving from the handling means 7 is held resting horizontally on the arms 53 of the supports 43 of the first row. In contrast, in the second final limit condition, while the case 3 still remains held resting on the supports 43 of the first row, this time with oblique orientation relative to the horizontal, the fixed supports 44, that is to say the fixed arms 56 of the second row correspondingly simultaneously extract the semi-finished product from the case 3.

The invention fulfils the aims previously indicated and is also qualified to provide the further important advantage of a fully mechanized and automated management of its functionalities which allows significant reductions in the times for supplying and topping up the materials and significant economies of management of the machine tools of entire production departments.

## Claims

1. A method for storing and feeding elongate-shaped semi-finished products to a user device **(2),** comprising the steps of:
- storing in a structure (**5**s) of a storage unit **(5),** at least one case **(3)** containing at least one elongate-shaped semi-finished product;
- picking up said cases **(3)** by means of related handling means **(7)**;
- depositing said cases **(3)** in a horizontal position on first supports **(43)** with variable geometric configuration;
said method **being characterised in that**
- the first supports **(43)** with variable geometric configuration are appropriately positioned relative to second supports **(44)** with fixed configuration; and
- hand over the elongate semi-finished products to said second supports **(44)** by means of rotation of the case **(3)** about its own longitudinal axis, with simultaneous acceptance of the load of said semi-finished products by the second supports **(44)** because of the relative transit through open sections **(11)** made in a base **(10)** of said case **(3)** and extraction from the case **(3)** of at least one said semi-finished product by said second supports **(44)**.

2. An automated plant for storing and feeding elongate-shaped semi-finished products for a user device **(2),** comprising
- at least one structure (**5**s) of a storage **(5),** in which at least one case **(3)** containing at least one elongate-shaped semi-finished product is stored;
- handling means **(7),** devised for moving said at least one case **(3)** from the structure (**5**s) and depositing the case **(3)** in a horizontal orientation at least near the user device **(2);**
Said plant **being characterized in that** it comprises
- first supports **(43)** with a variable geometric configuration between an oblique orientation and an horizontal orientation in which said first supports **(43)** receives the case **(3)** oriented with a horizontal orientation;
- second supports **(44)** with a fixed configuration appropriately positioned relative to first supports **(43)** along a longitudinal line parallel to the longitudinal line of the case **(3)** and through open sections **(11)** made in a base **(10)** of the case **(3);**
- said first supports**(43)** rotating the case **(3)** around its own longitudinal axis and, while the case **(3)** is crossed by the second supports **(44)** through the open sections **(11),** handing at least one semi-finished product over said second supports **(44)** that extract it from the case **(3)** while the latter is rotating around its own longitudinal axis.

3. The plant, according to claim **2, characterised in that** said case **(3)** is provided with a lid **(13)** and with means **(14)** for quick coupling - release of the lid **(13)** to/from the container body **(9)** of the case **(3).**

4. The plant, according to claim **2** or **3, characterised in that** said handling means **(7)** comprise
- an effector **(15)** for gripping the case **(3);**
- a first carriage **(34)** for supporting said effector **(15)** and
- a vertical upright **(35),** which supports said first carriage **(34)** guided in translation along a vertical line (z).

5. The plant, according to claim **4, characterised in that** said handling means **(7)** comprise
- at least one second carriage **(36),** which supports said upright **(35)** and is movable at least along a horizontal line (x;y) orthogonal to said upright **(35).**

6. The plant, according to claim **5, characterised in that** said upright **(35)** is supported by said second carriage **(36)** rotatably about an axis of rotation **(z)** which extends vertically.

7. The plant, according to claim **4, characterised in that** it comprises a third carriage **(37)** supported by said first carriage **(34)** guided in horizontal translation (x), said case **(3)** being supported by said third carriage **(37).**

8. The plant, according to claim **7, characterised in that** it comprises constraining means **(38),** for selectively constraining said case **(3)** to said third carriage **(37).**

## Patentansprüche

1. Ein Verfahren zur Lagerung und Zuführung länglich geformter Halbfertigprodukte zu einer Benutzervorrichtung **(2),** folgende Schritte beinhaltend:
- Lagerung in einer Struktur (**5**s) einer Lagereinheit **(5)** mindestens eines Behälters **(3),** der mindestens ein länglich geformtes Halbfertigprodukt enthält;
- Aufnahme besagter Behälter **(3)** mithilfe entsprechender Handhabungsmittel **(7);**
- Ablage besagter Behälter **(3)** in einer horizontalen Position auf ersten Trägern **(43)** mit variierbarer geometrische Konfiguration;
besagtes Verfahren **ist dabei dadurch gekennzeichnet, dass**
- die ersten Träger **(43)** mit variierbarer geometrischer Konfiguration passend im Verhältnis zu zweiten Trägern **(44)** mit feststehender Konfiguration positioniert sind; und
- sie die länglichen Halbfertigprodukte an besagte zweite Träger **(44)** durch die Drehung des Behälters **(3)** um seine eigene Längsachse übergeben, mit gleichzeitiger Annahme der Last besagter Halbfertigprodukte durch die zweiten Träger **(44)** aufgrund des jeweiligen Durchlaufs durch offene Abschnitte **(11),** die in einem Boden **(10)** des besagten Behälters **(3)** geschaffen wurden, und Entnahme aus dem Behälter **(3)** von mindestens einem besagter Halbfertigprodukte durch besagte zweite Träger **(44)**.

2. Eine automatische Anlage zur Lagerung und Zuführung länglich geformter Halbfertigprodukte für eine Benutzervorrichtung **(2),** Folgendes beinhaltend:
- mindestens eine Struktur (**5**s) einer Lagereinheit **(5),** in der mindestens ein Behälter **(3),** der mindestens ein länglich geformtes Halbfertigprodukte enthält, gelagert ist;
- Handhabungsmittel **(7),** die zur Bewegung des besagten mindestens einen Behälters **(3)** aus der Struktur (**5**s) und zur Ablage des Behälters **(3)** in einer horizontalen Ausrichtung zumindest in der Nähe der Benutzervorrichtung **(2)** konzipiert sind;
besagte Anlage **ist dabei dadurch gekennzeichnet, dass** sie Folgendes beinhaltet
- erste Träger **(43)** mit einer variierbaren geometrischen Konfiguration zwischen einer schrägen Ausrichtung und einer horizontalen Ausrichtung, in der besagte erste Träger **(43)** die Behälter **(3)** in einer horizontalen Ausrichtung ausgerichtet empfangen;
- zweite Träger **(44)** mit einer feststehenden Konfiguration, passend positioniert im Verhältnis zu ersten Trägern **(43)** entlang einer Längslinie parallel zur Längslinie des Behälters **(3)** und durch offene Abschnitte **(11),** die in einem Boden **(10)** des Behälters **(3)** geschaffen wurden;
- besagte erste Träger **(43)** drehen dabei den Behälter **(3)** um seine eigene Längsachse und, während der Behälter **(3)** durch die offenen Abschnitte **(11)** von den zweiten Trägern **(44)** durchquert wird, übergeben dabei mindestens ein Halbfertigprodukt an besagte zweite Träger **(44),** die es aus dem Behälter **(3)** entnehmen, während dieser sich um seine eigene Längsachse dreht.

3. Die Anlage nach dem Patentanspruch **2, gekennzeichnet dadurch, dass** besagter Behälter **(3)** mit einem Deckel **(13)** und mit Mitteln **(14)** zum raschen Verbinden - Lösen des Deckels **(13)** mit dem / vom Behälterkörper **(9)** des Behälters **(3)** ausgestattet ist

4. Die Anlage nach dem Patentanspruch **2** oder **3, gekennzeichnet dadurch, dass** besagte Handhabungsmittel **(7)** Folgendes beinhalten
- einen Effektor **(15)** zum Ergreifen des Behälters **(3);**
- einen ersten Wagen **(34)** zum Tragen des besagten Effektors **(15)** und
- einen vertikalen Ständer **(35),** der besagten ersten Wagen **(34),** in der Verschiebung auf einer vertikalen Linie (z) geführt, trägt.

5. Die Anlage nach dem Patentanspruch **4, gekennzeichnet dadurch, dass** besagte Handhabungsmittel **(7)** Folgendes beinhalten
- mindestens einen zweiten Wagen **(36),** der besagten Ständer **(35)** trägt und mindestens auf einer horizontalen Linie (x;y) orthogonal zu besagtem Ständer **(35)** beweglich ist.

6. Die Anlage nach dem Patentanspruch **5, gekennzeichnet dadurch, dass** besagter Ständer **(35)** von besagtem zweitem Wagen **(36)** um eine Rotationsachse **(z),** die sich vertikal erstreckt, drehbar getragen wird.

7. Die Anlage nach dem Patentanspruch **4, gekennzeichnet dadurch, dass** sie einen dritten Wagen **(37)** beinhaltet, der von besagtem ersten Wagen **(34),** in horizontaler Verschiebung (x) geführt, getragen wird, besagter Behälter **(3)** wird dabei von besagtem dritten Wagen **(37)** getragen.

8. Die Anlage nach dem Patentanspruch **7, gekennzeichnet dadurch, dass** sie Zwangseinrichtungen **(38)** beinhaltet, um besagten Behälter **(3)** selektiv an besagten dritten Wagen **(37)** zu zwingen.

## Revendications

1. Un procédé pour le stockage et l'alimentation de produits semi-finis de forme allongée à un dispositif utilisateur (2), comprenant les étapes consistant à :
- stocker dans une structure (5s) d'une unité de stockage (5), au moins une caisse (3) contenant au moins un produit semi-fini de forme allongée ;
- prélever lesdites caisses (3) à l'aide de moyens de manipulation (7) correspondants ;
- déposer lesdites caisses (3) dans une position horizontale sur des premiers supports (43) à configuration géométrique variable ;
ledit procédé étant **caractérisé en ce que**
- les premiers supports (43) à configuration géométrique variable sont opportunément positionnés par rapport à des deuxièmes supports (44) à configuration fixe ; et
- remettre les produits semi-finis allongés auxdits deuxièmes supports (44) par le biais d'une rotation de la caisse (3) autour de son propre axe longitudinal, avec prise en charge simultanée desdits produits semi-finis par les deuxièmes supports (44) par le biais du transit correspondant à travers des sections ouvertes (11) réalisées dans une base (10) de ladite caisse (3) et extraction d'au moins un produit semi-fini de la caisse (3) par lesdits deuxièmes supports (44).

2. Une installation automatisée pour le stockage et l'alimentation de produits semi-finis de forme allongée à un dispositif utilisateur (2), comprenant
- au moins une structure (5s) d'une unité de stockage (5), dans laquelle au moins une caisse (3) contenant au moins un produit semi-fini de forme allongée est stockée ;
- des moyens de manipulation (7), conçus pour déplacer ladite au moins une caisse (3) de la structure (5s) et déposer la caisse (3) dans une orientation horizontale au moins à proximité du dispositif utilisateur (2) ;
ladite installation étant **caractérisée en ce qu'**elle comprend
- des premiers supports (43) à configuration géométrique variable entre une orientation oblique et une orientation horizontale dans laquelle lesdits premiers supports (43) reçoivent la caisse (3) orientée avec une orientation horizontale ;
- des deuxièmes supports (44) à configuration fixe opportunément positionnés par rapport aux premiers supports (43) le long d'une direction longitudinale parallèle à la direction longitudinale de la caisse (3) et à travers des sections ouvertes (11) réalisées dans une base (10) de la caisse (3) ;
- lesdits premiers supports (43) faisant tourner la caisse (3) autour de son propre axe longitudinal et, alors que la caisse (3) est traversée par les deuxièmes supports (44) à travers les sections ouvertes (11), amenant au moins un produit semi-fini sur lesdits deuxièmes supports (44) qui l'extraient de la caisse (3) alors que cette dernière tourne autour de son propre axe longitudinal.

3. L'installation selon la revendication 2, **caractérisée en ce que** ladite caisse (3) est pourvue d'un couvercle (13) et de moyens (14) pour l'accouplement
- désaccouplement rapide du couvercle (13) avec le/du corps-contenant (9) de la caisse (3).

4. L'installation selon la revendication 2 ou 3, **caractérisée en ce que** lesdits moyens de manipulation (7) comprennent
- un effecteur (15) de prise de la caisse (3) ;
- un premier chariot (34) pour supporter ledit effecteur (15) et
- un montant vertical (35), qui supporte ledit premier chariot (34) guidé en translation le long d'une direction verticale (z).

5. L'installation selon la revendication 4, **caractérisée en ce que** lesdits moyens de manipulation (7) comprennent
- au moins un deuxième chariot (36), qui supporte ledit montant (35) et est mobile au moins le long d'une direction horizontale (x ; y) orthogonale audit montant (35) .

6. L'installation selon la revendication 5, **caractérisée en ce que** ledit montant (35) est supporté par ledit deuxième chariot (36) de façon pivotante autour d'un axe de rotation (z) qui s'étend verticalement.

7. L'installation selon la revendication 4, **caractérisée en ce qu'**elle comprend un troisième chariot (37) supporté par ledit premier chariot (34) guidé en translation horizontale (x), ladite caisse (3) étant supportée par ledit troisième chariot (37).

8. L'installation selon la revendication 7, **caractérisée en ce qu'**elle comprend des moyens d'assujettissement (38), pour assujettir sélectivement ladite caisse (3) audit troisième chariot (37).
